# EUROPEAN PATENT APPLICATION

(11) **EP 4 582 609 A1**
(43) Date of publication of application: **09.07.2025**
(21) Application number: 23858520.2
(22) Date of filing: 17.01.2023
(51) Int. Cl.: D06F 25/00, D06F 58/20, D06F 58/26, D06F 58/24

(54) **CLOTHES TREATMENT DEVICE**

(30) Priority: 31.08.2022 CN 202211057592; 31.08.2022 CN 202211060628
(71) Applicant: Nanjing Roborock Innovation Technology Co., Ltd., Nanjing, Jiangsu 210039 (CN)
(72) Inventor: HUANG, Jibai, Shenzhen, Guangdong 518000 (CN); WANG, Wei, Shenzhen, Guangdong 518000 (CN); ZHAO, Changjian, Shenzhen, Guangdong 518000 (CN); DUAN, Chuanlin, Shenzhen, Guangdong 518000 (CN); YAN, Yadong, Shenzhen, Guangdong 518000 (CN); QUAN, Gang, Shenzhen, Guangdong 518000 (CN)
(74) Representative: Studio Torta S.p.A.
(86) International application number: PCT/CN2023/072564
(87) International publication number: WO 2024/045477

(57) **Abstract**

A clothes treatment device, comprising: a drum (30) and a drying module (20), wherein the drum is provided with at least a drum air outlet and a drum air inlet; the drying module comprises a housing (206) and a moisture absorption and removal member (203); the housing comprises at least a first housing (2061) and a second housing (2062), and the moisture absorption and removal member rotates in a space formed by the first housing being in sealing-fit with the second housing; the space is at least divided into a moisture absorption space (201) and a regeneration space (202); and a first moisture absorption space and a second moisture absorption space are respectively formed on two sides of the moisture absorption and removal member in the moisture absorption space, and during at least part of a dehumidification operation period, the temperature difference between at least part of the first moisture absorption space and at least part of the second moisture absorption space ranges from 70°C to 80°C. The clothes treatment device meets the requirement for more efficient and convenient clothes treatment without damaging the clothes.

## Description

### CROSS-REFERENCE TO RELATED APPLICATIONS

The present application claims priorities to Chinese Patent Application Nos. 202211060628.1 and 202211057592.1 filed on August 31, 2022, the disclosures of which are incorporated herein by reference.

### TECHNICAL FIELD

The present application relates to the field of household appliances, and in particular to a laundry treatment apparatus.

### BACKGROUND

With the improvement of people's living standards, more and more consumers demand for more efficient and convenient treatment of laundry. A full-automatic washer-dryer machine can dry the laundry directly after washing, eliminating the need for long-time airing. This function is especially suitable for laundry washing in humid and rainy weather, and thus has become more and more favored by consumers.

In most of the drying systems of the existing laundry treatment apparatuses, an evaporator is used to heat and absorb moisture from the humid air in the inner drum of a washer-dryer machine to obtain high temperature air, which re-enters the inner drum of the washer-dryer machine to evaporate the moisture in the laundry. However, the overall temperature of the evaporator is consistent, and in the process of evaporating the humid air, the evaporator's ability to absorb moisture from the humid air decreases, resulting in low moisture absorbing efficiency, long drying time and high power consumption. In addition, in some methods, the moisture is removed from a humid airflow directly by condensate spraying or by a condenser, in which case the treated airflow is still high in moisture content and needs to undergo a process of "heating-cooling and dehumidifying-reheating" for a recycling purpose, resulting in low dehumidifying efficiency and high power consumption.

Therefore, the existing drying assembly can no longer meet the needs of consumers, and it is necessary to propose a new drying structure and improve the structure of the existing laundry treatment apparatus.

### SUMMARY

The technical problem to be solved by the present application is to provide a laundry treatment apparatus with shorter drying time and higher drying efficiency.

A series of concepts in simplified form are introduced in this section, and will be described in further detail in the detailed description section. This section of the present application is not indented to limit the key features and essential technical features of the technical solution as claimed, let alone to attempt to determine the protection scope of the technical solution as claimed.

In order to solve the above technical problem, the present application provides a laundry treatment apparatus, including: a drum and a drying module, wherein
the drum has at least a drum air outlet and a drum air inlet;
the drying module includes: a housing, and a moisture adsorption-desorption component;
the housing at least includes a first housing and a second housing, wherein the first housing and the second housing are in sealing fit to form at least a space for accommodating the moisture adsorption-desorption component, and the moisture adsorption-desorption component rotates within the space;
at least two partition members are provided radially at corresponding positions on the first housing and the second housing, respectively, wherein the at least two partition members separate the space into at least a moisture absorbing space and a desorption space on a projection plane perpendicular to a rotating direction of the moisture adsorption-desorption component;
a first moisture absorbing space and a second moisture absorbing space are formed in the moisture absorbing space on both sides of the moisture adsorption-desorption component, respectively; and
during at least part of a dehumidifying operation period, a temperature difference between at least part of the first moisture absorbing space and at least part of the second moisture absorbing space ranges from 70°C to 80°C.

In an embodiment, during at least part of the dehumidifying operation period, a temperature difference between at least partial surfaces on both sides of the moisture adsorption-desorption component ranges from 70°C to 80°C in the moisture absorbing space.

In an embodiment, during at least part of the dehumidifying operation period, a temperature difference between substantially symmetrical positions of the first moisture absorbing space and the second moisture absorbing space ranges from 70°C to 80°C, or a temperature difference between substantially symmetrical positions on surfaces of both sides of the moisture adsorption-desorption component ranges from 70°C to 80°C.

In an embodiment, at least a first airflow inlet is formed in the first housing; at least a first airflow outlet is formed in the second housing; and the first airflow inlet and the first airflow outlet are respectively provided to be adjacent to the at least two partition members.

In an embodiment, the moisture adsorption-desorption component rotates sequentially through the desorption space, the first airflow outlet, and the first airflow inlet; and during at least part of the dehumidifying operation period, in the moisture absorbing space, the temperature at a location between the first airflow outlet and the first airflow inlet ranges from 70°C to 80°C.

In an embodiment, the drying module includes a heating assembly provided in the desorption space; and the heating assembly operates between a first heating power and a second heating power in a fluctuated or alternate manner.

In an embodiment, the first heating power is between 400 W and 800 W, and the second heating power is between 1200 W and 1600 W.

In an embodiment, a thickness-to-diameter ratio of the moisture adsorption-desorption component ranges from 1/80 to 1/4.

In an embodiment, a thickness-to-diameter ratio of the moisture adsorption-desorption component ranges from 1/20 to 1/10.

Furthermore, the present application further provides a laundry treatment apparatus, including: a drum and a drying module, wherein
the drum has at least a drum air outlet and a drum air inlet;
the drying module includes: a housing, and a moisture adsorption-desorption component;
the housing at least includes a first housing and a second housing, wherein the first housing and the second housing are in sealing fit to form at least a space for accommodating the moisture adsorption-desorption component, and the moisture adsorption-desorption component rotates within the space;
at least two partition members are provided radially at corresponding positions on the first housing and the second housing, respectively, wherein the at least two partition members separate the space into at least a moisture absorbing space and a desorption space on a projection plane perpendicular to a rotating direction of the moisture adsorption-desorption component;
the first housing is provided with at least a first airflow inlet in communication with the drum air outlet; and the second housing is provided with at least a first airflow outlet in communication with the drum air inlet; and
during at least part of a dehumidifying operation period, a temperature of an airflow at least at a position adjacent to the drum air inlet between the first airflow outlet and the drum air inlet is a first temperature, which ranges from 70°C to 80°C.

In an embodiment, a temperature of an airflow at least at a position on the drum close to the drum air outlet is a second airflow temperature, which ranges from 50°C to 60°C.

In an embodiment, at least one air exhaust duct is provided between the first airflow inlet and the drum air outlet; and a temperature of an airflow at least at a position in the air exhaust duct close to the drum air outlet is a second airflow temperature, which ranges from 50°C to 60°C.

In an embodiment, a temperature difference between the first airflow temperature and the second airflow temperature is 25 ± 5°C.

In an embodiment, an air intake duct is provided between the first airflow outlet and the drum air inlet; a first temperature detection unit is provided on the air intake duct at a position close to the drum air inlet; and a second temperature detection unit is provided on the drum or the air exhaust duct close to the drum air outlet.

In an embodiment, the drying module includes a heating assembly provided in the desorption space; and the heating assembly operates between a first heating power and a second heating power in a fluctuated or alternate manner.

In an embodiment, the first heating power is between 400 W and 800 W, and the second heating power is between 1200 W and 1600 W.

In an embodiment, a thickness-to-diameter ratio of the moisture adsorption-desorption component ranges from 1/80 to 1/4.

In an embodiment, a thickness-to-diameter ratio of the moisture adsorption-desorption component ranges from 1/20 to 1/10.

In an embodiment, a circulating fan and a regenerating fan are provided on an airflow path where the moisture absorbing space is located and an airflow path where the desorption space is located, respectively.

In the present application, the operating power of the heating assembly and the thickness-to-diameter ratio of the moisture adsorption-desorption component are limited to a certain range, such that the temperature difference between at least part of the first moisture absorbing space and at least part of the second moisture absorbing space ranges from 70°C to 80°C for at least part of the dehumidifying operation period. By limiting the temperature difference between the two spaces to a certain temperature range, the drying time of the laundry treatment apparatus will be effectively shortened, and the drying efficiency will be increased without damaging the laundry, such that the need for more efficient and convenient treatment of the laundry is satisfied.

In addition, in the present application, the operating power of the heating assembly and the thickness-to-diameter ratio of the moisture adsorption-desorption component are limited to a certain range, such that the first airflow temperature at least at a position close to the drum air inlet between the first airflow outlet and the drum air inlet ranges from 70°C to 80°C. By limiting the first airflow temperature to a certain temperature range, not only the power consumption can be reduced, a better drying effect can also be achieved, and the hand feel and dryness of the laundry treated at this temperature are satisfactory.

These and other aspects of the present disclosure will be clearly understood according to the embodiments described below, and will be elucidated with reference to the embodiments described below.

### BRIEF DESCRIPTION OF DRAWINGS

The following accompanying drawings of the present application are taken herein as part of the embodiments of the present application for the purpose of understanding the present application. The accompanying drawings illustrate embodiments of the present application and descriptions thereof for explaining the principles of the present application.

In the drawings:
FIG. 1 is a structural diagram of a washer-dryer machine according to an optional embodiment of the present application;
FIG. 2 is a structural diagram of a drying module according to an optional embodiment of the present application;
FIG. 3 is an exploded view of a drying module according to an optional embodiment of the present application; and
FIG. 4 is a schematic diagram of a flow direction of circulating airflow according to an optional embodiment of the present application.

Description of Reference Numerals:
10-outer casing, 20-drying module, 201-moisture absorbing space, 2011-first airflow inlet, 2012-first airflow outlet, 202-desorption space, 203-moisture adsorption-desorption component, 204-circulating fan, 205-regenerating fan, 206-housing, 2061-first housing, 2062-second housing, 2063-separator, 207-rotating portion, 208-heating module, 2081-cover, 2082-heating assembly, 30-drum, 40-drum air exhaust duct, 50-drum air intake duct.

### DETAILED DESCRIPTION

In the description that follows, a great deal of specific detail is given for a more thorough understanding of the present application. However, it is apparent to those skilled in the art that the present application can be implemented without one or more of these details. In other examples, some technical features that are well known in the art will not be described to avoid confusion with the present application.

It should be noted that the terms used herein are merely intended to describe specific embodiments and are not intended to limit exemplary embodiments according to the present application. As used herein, the singular form is also intended to include the plural form, unless otherwise clearly indicated in the context. In addition, it should also be understood that the terms "comprising" and/or "including" as used in this specification may indicate the presence of features, wholes, steps, operations, components and/or assemblies, which do not exclude the presence or addition of one or more other features, wholes, steps, operations, components, assemblies and/or their combinations.

Exemplary embodiments of the present application will be described herein in more detail with reference to the accompanying drawings. However, these exemplary embodiments may be implemented in a variety of different forms and shall not be construed as being limited to the embodiments set forth herein. It should be understood that these embodiments are provided to make the disclosure of the present application thorough and complete and to fully communicate the ideas of these exemplary embodiments to those of ordinary skill in the art.

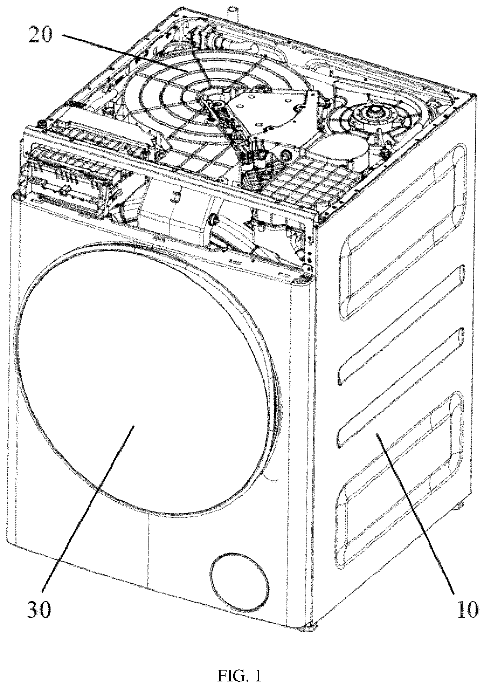

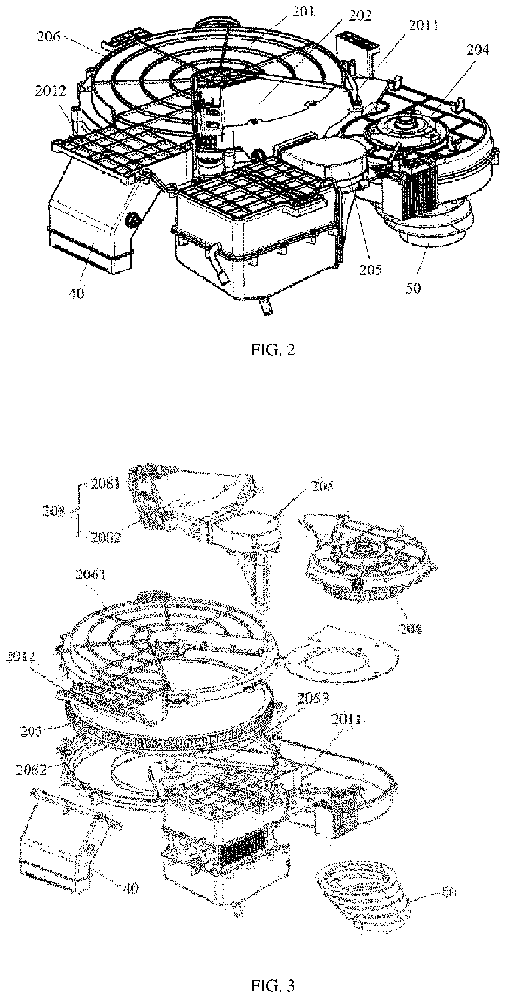

As shown in FIG. 1, the present application provides a laundry treatment apparatus, which includes an outer casing 10, a drying module 20, and a drum 30. As shown in FIGS. 2 and 3, the drying module 20 includes a moisture adsorption-desorption component 203, a housing 206, and a heating module 208. The housing 206 include a first housing 2061 and a second housing 2062, which are in sealing fit to form a space for accommodating the moisture adsorption-desorption component 203. The moisture adsorption-desorption component 203 rotates within the space formed by sealing fit between the first housing 2061 and the second housing 2062. At least two partition members 2063 are provided radially at corresponding positions on the first housing 2061 and the second housing 2062, respectively, and the at least two partition members 2063 separate the space into at least a moisture absorbing space 201 and a desorption space 202 on a projection plane perpendicular to a rotating direction of the moisture adsorption-desorption component 203. The first housing 2061 is provided with a first airflow inlet 2011 close to the separator, and the second housing 2062 is provided with a first airflow outlet 2012 close to another separator. The first airflow inlet 2011 and the first airflow outlet 2012 are respectively located close to the at least two partition members and within the moisture absorbing space 201.

It should be noted that the separator indicated here refers to each individual separating assembly connectively provided from the circumferential side wall of the first housing 2061 or the second housing 2062 to the middle position of the housing. It should be noted that the middle position is not necessarily the center position. Thus, it can be understood that the separator is not necessarily provided radially. The at least two partition members 2063 can be integrally formed or manufactured and installed separately, which does not affect the definition of the partition members.

The drum 30 has a drum air inlet and a drum air outlet. The first airflow outlet 2012 of the housing 206 is communicated to the drum air inlet via an air intake duct 40 of the drum 30, and the first airflow inlet 2011 of the housing 206 is connected to the drum air outlet via an air exhaust duct 50 of the drum 30.

The moisture adsorption-desorption component 203 is provided in the moisture absorbing space 201 and the desorption space 202, such that the circulating airflow and the dehumidifying airflow respectively flow through the moisture adsorption-desorption component 203. The moisture adsorption-desorption component 203 is configured to absorb moisture from the circulating airflow in the moisture absorbing space 201, and to discharge the moisture through the dehumidifying airflow in the desorption space 202. In the moisture absorbing space 201, a first moisture absorbing space and a second moisture absorbing space are formed on both sides of the moisture adsorption-desorption component 203, respectively. The first moisture absorbing space is a space with a first humidity of airflow that flows in from the drum air outlet, and the second moisture absorbing space is a space that has a second humidity of airflow after moisture absorption by the moisture adsorption-desorption component 203. The first humidity of airflow is greater than the second humidity of airflow. The moisture adsorption-desorption component 203 is rotatably disposed in the space formed by the first housing 2061 and the second housing 2062, and at least a partial region of the moisture adsorption-desorption component 203 periodically passes through the moisture absorbing space 201 and the desorption space 202.

In an embodiment, a circulating fan 204 is provided on an airflow path where the moisture absorbing space 201 is located, to form a circulating airflow between the drum 30 and the moisture absorbing space 201. A regenerating fan 205 is provided on an airflow path where the desorption space 202 is located, to form a dehumidifying airflow inside the desorption space 202.

In an embodiment, the desorption space 202 is further provided with a heating module 208, and the heating module 208 includes a cover 2081 and a heating assembly 2082 mounted on the cover 2081. The heating module 208 is disposed close to the desorption space and adjacent to the moisture adsorption-desorption component.

In addition, a rotating portion 207 is further provided, which is connected to the outer edge of the moisture adsorption-desorption component 203 in a transmission manner. The rotating portion 207 is provided with a motor therein for driving the rotating portion 207 to rotate, such that the moisture adsorption-desorption component 203 as connected to the rotating portion 207 in a transmission manner is driven to rotate relative to the housing 206. In an embodiment, the rotational speed is 2-10 revolutions per minute (rpm). In specific applications, the laundry treatment apparatus may further include but is not limited to components such as controllers.

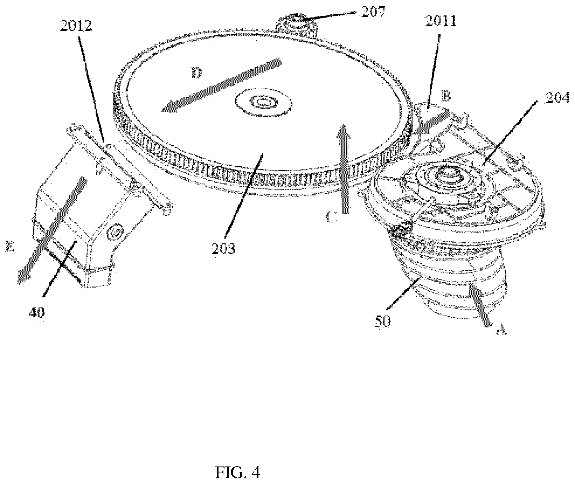

As indicated by the arrow in FIG. 4, during the operation of the circulating fan 204, a pressure difference is developed on both sides of the circulating fan 204, such that a circulating airflow is formed between the drum 30 and the moisture absorbing space 201. As a result, the humid air inside the drum 30 may enter, via the air exhaust duct 50, the moisture absorbing space 201 from the first airflow inlet 2011 of the moisture absorbing space 201. When passing through the moisture adsorption-desorption component 203, the water vapor of the circulating airflow is absorbed, and the circulating airflow is heated at the high temperature of the turntable itself, leading to a decrease in humidity and an increase in temperature of the circulating airflow. Then, the high-temperature dry air as processed is discharged into the drum 30 from the first airflow outlet 2012 of the moisture absorbing space 201 via the air intake duct 40. In this way, the air circulates in the drum 30 and the moisture absorbing space 201, allowing for continuous heat exchange between the laundry in the drum 30 and the circulating airflow to remove residual moisture from the laundry, thereby achieving the purpose of drying the laundry. At the same time, the regenerating fan 205 operates to develop a pressure difference on both sides of the regenerating fan 205 to form a dehumidification airflow in the desorption space 202, allowing the air from the drum 30 to enter the desorption space 202 and flow through the moisture adsorption-desorption component 203 to desorb moisture from the moisture adsorption-desorption component 203. Thus, the moisture content of the moisture adsorption-desorption component 203 can be reduced, and the moisture adsorption-desorption component 203 can achieve a sustained and high water absorbing capacity, such that the dehumidifying efficiency is improved.

During the drying process, due to the continuous rotation of the moisture adsorption-desorption component 203, at least part of the moisture adsorption-desorption component 203 dynamically and periodically switches between the moisture absorbing space 201 and the desorption space 202. The part of the moisture adsorption-desorption component 203 disposed in the moisture absorbing space 201 absorbs water vapor in the circulating airflow, and heats the passing circulating airflow by virtue of its own high temperature. Then, this part rotates to the desorption space 202 to be heated by the heating assembly 2082, thereby quickly desorbing the moisture in this part. As a result, during the rotation of the moisture adsorption-desorption component 203, it can continuously carry out moisture absorbing and heating on the circulating airflow in the moisture absorbing space 201, and can also continuously discharge the moisture absorbed by the moisture adsorption-desorption component 203 to maintain a good water absorbing capacity all the way, such that the moisture absorbing efficiency is improved.

In this embodiment, the moisture adsorption-desorption component 203 may be configured as a disc-shaped structure with a certain thickness, and the thickness-to-diameter ratio is 1/80 to 1/4 to adapt to the overall structure of the laundry treatment apparatus. In an embodiment, the thickness-to-diameter ratio of the moisture adsorption-desorption component 203 is 1/20 to 1/10 to improve the moisture absorbing efficiency of the moisture adsorption-desorption component 203. The moisture adsorption-desorption component 203 may be made of materials with a strong water absorbing capacity, such as zeolite, alkali metal aluminosilicate, lithium chloride, silica gel, modified silica gel, and activated alumina.

Specifically, the cover 2081 is provided on the desorption space 202, and the heating assembly 2082 is mounted on the cover 2081 and may be electric heating wires or PTC heaters or other elements with a heating function. Due to the influence of the performance of the moisture adsorption-desorption component 203 itself, it is necessary to control the heating temperature of the heating assembly 2082 within a certain range, such that the moisture adsorption-desorption component 203 achieves an optimal regeneration performance, and is also within the range of the optimal moisture absorbing temperature when rotating to the moisture absorbing space 201. The edge of the cover 2081 is fixedly connected to the housing 206. Therefore, during the rotation of the moisture adsorption-desorption component 203, the cover 2081 and the heating assembly 2082 do not rotate accordingly. Meanwhile, the cover 2081 is disposed as close as possible to the moisture adsorption-desorption component 203, thereby achieving heating of the region of the moisture adsorption-desorption component 203 rotating to the vicinity of the heating assembly 2082.

In an embodiment, the heating assembly 2082 operates between a first heating power and a second heating power in an alternate manner. Here, the first heating power is between 400 W and 800 W and the second heating power is between 1200 W and 1600 W. In one aspect, the purpose of configuring the first heating power to be between 400 W and 800 W is to reach a higher temperature in the desorption space 202 to heat the moisture adsorption-desorption component 203, and improve the regeneration efficiency of moisture desorption for the moisture adsorption-desorption component 203. In another aspect, the purpose of configuring the second heating power to be between 1200 W and 1600 W is to prevent the moisture adsorption-desorption component 203 from reaching a too high temperature after passing through the desorption space 202, and from overheating the circulating airflow after rotating to the moisture absorbing space 201, such that the circulating airflow can be prevented from damaging the laundry after entering the drum 30 and the moisture adsorption-desorption component can be prevented from being affected in the moisture absorbing efficiency due to the high temperature. The operating power of the heating assembly 2082 is configured to alternate between the first heating power and the second heating power, and the ranges of the first heating power and the second heating power are defined, such that a higher regeneration efficiency can be achieved and the temperature of the circulating airflow entering the drum can be controlled, thereby preventing damaging the laundry. In another embodiment, the heating assembly 2082 operates between the first heating power and the second heating power in a fluctuated manner, for example, in the form of periodic waveforms such as square waves or sine/cosine waves. Here, the first heating power is between 400 W and 800 W and the second heating power is between 1200 W and 1600 W.

In the present application, the entire drying process is divided into three stages: a start-up stage, a dehumidifying operation stage, and a cooling stage. The start-up stage refers to the stage in which the laundry treatment apparatus starts, according to user instructions, various components such as the circulating fan 204, the regenerating fan 205, a motor that drives the moisture adsorption-desorption component 203 to rotate, and the heating assembly 2082. In the start-up stage, a controller controls the circulating fan 204, the regenerating fan 205, and the motor to start running according to a drying instruction input by the user; and the heating assembly 2082 starts heating up, and various parameters such as fan speed and heating power are rapidly increasing.

The dehumidifying operation stage refers to the stage in which the circulating fan 204, the regenerating fan 205, and the motor operate stably and the heating assembly 2082 is working within an effective power range. After entering the dehumidifying operation stage, the changes in various parameters such as fan speed and heating power tend to stabilize. The rotational speed of the moisture adsorption-desorption component 203 may be set to a fixed value, and the operating power of the heating assembly 2082 alternates between a first heating power of 400 W to 800 W and a second heating power of 1200 W to 1600 W.

The cooling stage refers to the stage in which the heating assembly 2082 stops working, and the circulating fan 204, the regenerating fan 205, and the motor continue to operate until the laundry is cooled. When an inflection point is detected in a drum-exiting temperature, the controller determines that the laundry has been dried and then turns off the heating assembly. That is, the drying process ends, and the cooling stage is entered. Then, the circulating fan 204, the regenerating fan 205, and the motor continue to operate; the laundry inside the drum 30 enters a cooling process; and various parameters such as fan speed gradually return to zero.

During the dehumidifying operation stage, when the circulating airflow passes through the moisture adsorption-desorption component 203, in one aspect, the moisture adsorption-desorption component 203 absorbs moisture from the circulating airflow by virtue of its own water absorbing properties, such that water vapor is absorbed from the circulating airflow to thus decrease the humidity of the circulating airflow, and meanwhile, the latent heat of condensation in the water vapor is released to consequently increase the temperature of the circulating airflow. In another aspect, after the moisture adsorption-desorption component 203 rotates from the desorption space 202 to the moisture absorbing space 201, it heats the circulating airflow passing therethrough by virtue of its own high temperature as achieved, thereby increasing the temperature of the circulating airflow. In this way, after passing through the moisture adsorption-desorption component 203, the circulating airflow decreases in humidity and increases in temperature, thereby forming a temperature difference within a certain range between the first moisture absorbing space and the second moisture absorbing space.

In an embodiment, the laundry treatment apparatus further includes a controller, and an air intake duct is provided between the first airflow outlet and the drum air inlet; a first temperature detection unit is provided on the air intake duct at a position close to the drum air inlet; and a second temperature detection unit is provided on the drum or the air exhaust duct close to the drum air outlet. The temperature detected by the first temperature detection unit and the second temperature detection unit can be used to control the power or speed of the circulating fan 204, the regenerating fan 205, or the heating assembly 2082 respectively by the controller.

In the present application, the thickness-to-diameter ratio of the moisture adsorption-desorption component, the rotational speed of a dehumidifying turntable, and the operating power of the heating assembly are limited within a certain range, which ensures that during at least part of the dehumidifying operation stage, a first airflow temperature detected by the first temperature detection unit is approximately between 70°C and 80°C, and a second airflow temperature detected by the second temperature detection unit is approximately between 50°C and 60°C. In an embodiment, a temperature difference between the first airflow temperature and the second airflow temperature is 25 ± 5°C. By limiting the first airflow temperature and the second airflow temperature to be within the above temperature ranges, not only the power consumption can be reduced, a better drying effect can also be achieved, and the hand feel and dryness of the laundry treated at these temperatures are satisfactory.

In addition, the inventor found through research that during at least part of the dehumidifying operation period, when the temperature difference between the first and second moisture absorbing spaces in the moisture absorbing space 201 is stabilized within the range from 70°C to 80°C for drying, the laundry treatment apparatus can achieve a good drying effect, and the hand feel and dryness of the laundry treated at this temperature are satisfactory.

In an embodiment, during at least part of the dehumidifying operation period, a temperature difference between at least partial surfaces on both sides of the moisture adsorption-desorption component 203 ranges from 70°C to 80°C in the moisture absorbing space 201.

In an embodiment, during at least part of the dehumidifying operation period, a temperature difference between substantially symmetrical positions of the first moisture absorbing space and the second moisture absorbing space ranges from 70°C to 80°C, or a temperature difference between substantially symmetrical positions on surfaces of both sides of the moisture adsorption-desorption component 203 ranges from 70°C to 80°C.

In an embodiment, the moisture adsorption-desorption component 203 rotates sequentially through the desorption space 202, the first airflow outlet 2012, and the first airflow inlet 2011; and during at least part of the dehumidifying operation period, a temperature difference of positions in the moisture absorbing space 201 and between the first airflow outlet 2012 and the first airflow inlet 2011 ranges from 70°C to 80°C.

In the above manner, a better drying effect can be achieved, and the hand feel and dryness of the laundry treated at this temperature are satisfactory.

Further specific embodiments are provided below for illustration. In each embodiment, based on the basic structural configuration of the laundry treatment apparatus described above, experiments are conducted under different parameter conditions to determine the temperature difference between the first moisture absorbing space and the second moisture absorbing space and the drying time. The experimental conditions are as follows: the laundry as washed weighs about 4 Kg; the thickness-to-diameter ratio of the moisture adsorption-desorption component 203 is limited to approximately 1/20 to 1/10; the rotational speed of the moisture adsorption-desorption component 203 is limited to 2 rpm to 10 rpm; and in the dehumidifying operation stage, the first heating power of the heating assembly 2082 is limited to about 400 W to 800 W, and the second heating power to about 1200 W to 1600 W. The detection points for the temperature difference may be arranged at substantially symmetrical positions of the first moisture absorbing space and the second moisture absorbing space, or at substantially symmetrical positions on surfaces of both sides of the moisture adsorption-desorption component 203, or at positions located at the first airflow outlet 2012 and the first airflow inlet 2011. It should be noted that the weight of the laundry is only illustrative and is not a parameter affecting the drying effect.

It should be noted that the regeneration and moisture absorbing properties of the moisture adsorption-desorption component 203 itself are affected by the heating temperature. If the temperature is above or below the optimal regeneration temperature range, it will result in a decrease in the regeneration performance of the moisture adsorption-desorption component 203. At the same time, when the affected part of the moisture adsorption-desorption component 203 rotates to the moisture absorbing space 201, its temperature will also be higher or lower than the optimal moisture absorbing temperature range, resulting in a decrease in the moisture absorbing performance of the moisture adsorption-desorption component 203. As a result, the final drying efficiency of the laundry is affected.

In Embodiment 1, the thickness-to-diameter ratio of the moisture adsorption-desorption component 203 is set to 25 mm/320 mm = 0.0780, the rotational speed of the moisture adsorption-desorption component 203 is 5 rpm, and the operating power of the heating assembly 2082 is between a minimum operating power of 600 W and a maximum operating power of 1400 W. Based on experimental measurements, during the dehumidifying operation stage, the actual temperature difference between the first and second moisture absorbing spaces varies approximately within the range of 72.7°C to 77.9°C, with a drying time of about 128 minutes.

In Embodiment 2, the thickness-to-diameter ratio of the moisture adsorption-desorption component 203 remains unchanged at 25 mm/320 mm = 0.0780; the operating power of heating assembly 2082 remains unchanged between the minimum operating power of 600 W and the maximum operating power of 1400 W; and the rotational speed of the moisture adsorption-desorption component 203 is reduced to 3 rpm. In this case, although the moisture adsorption-desorption component 203 is lower in rotational speed than that in Embodiment 1 and longer in heating time when passing through the desorption space 202, the temperature of the part of the moisture adsorption-desorption component 203 passing through the desorption space 202 is still within the optimal regeneration temperature range, and this rotational speed has no significant impact on the moisture absorbing efficiency of the moisture adsorption-desorption component 203. Based on experimental measurements, during the dehumidifying operation stage, the actual temperature difference between the first and second moisture absorbing spaces varies approximately within the range of 72.9°C to 78.6°C, with a drying time of about 130 minutes.

In Embodiment 3, the thickness-to-diameter ratio of the moisture adsorption-desorption component 203 remains unchanged at 25 mm/320 mm = 0.0780; the operating power of the heating assembly 2082 remains unchanged between the minimum power of 600 W and the maximum power of 1400 W; and the rotational speed of the moisture adsorption-desorption component 203 is increased to 8 rpm. In this case, the rotational speed of the moisture adsorption-desorption component 203 is higher. Due to the increase in the rotational speed, the moisture may not be fully desorbed in the desorption space, resulting in a certain loss of moisture absorbing efficiency after the moisture adsorption-desorption component 203 rotates to the moisture absorbing space 201. Meanwhile, due to the short heating time when the moisture adsorption-desorption component 203 passes through the desorption space 202, there is also a loss in the heating efficiency for the circulating airflow after the moisture adsorption-desorption component 203 rotates to the moisture absorbing space 201. However, the above losses in efficiency are still within an acceptable range. Based on experimental measurements, during the dehumidifying operation stage, the actual temperature difference between the first and second moisture absorbing spaces varies approximately within the range of 70.3°C to 76.2°C, with a drying time of about 133 minutes.

In Embodiment 4, the thickness-to-diameter ratio of the moisture adsorption-desorption component 203 remains unchanged at 25 mm/320 mm = 0.0780; the rotational speed of the moisture adsorption-desorption component 203 remains unchanged at 5 rpm; and the operating power of the heating assembly 2082 is between a minimum power of 400 W and a maximum power of 1200 W. In this case, when the moisture adsorption-desorption component 203 passes through the desorption space 202, the heating temperature is relatively low, but still within the optimal regeneration temperature range; and when the moisture adsorption-desorption component 203 rotates to the moisture absorbing space 201 to absorb moisture, its temperature is still within the optimal moisture absorbing temperature range. Consequently, there is a relatively small impact on the regeneration efficiency and moisture absorbing efficiency of the moisture adsorption-desorption component 203 itself, and the heating efficiency for the circulating airflow somewhat decreases due to the decreased temperature of the moisture adsorption-desorption component 203 that has passed through the moisture absorbing space 201. However, the temperature of the circulating airflow is still controlled within a preset range, such that the impact on the final drying efficiency is relatively small. Based on experimental measurements, during the dehumidifying operation stage, the actual temperature difference between the first and second moisture absorbing spaces varies approximately within the range of 70.2°C to 75.6°C, with a drying time of about 136 minutes.

In Embodiment 5, the thickness-to-diameter ratio of the moisture adsorption-desorption component 203 remains unchanged at 25 mm/320 mm = 0.0780; the rotational speed of the moisture adsorption-desorption component 203 remains unchanged at 5 rpm; and the operating power of the heating assembly 2082 is between a minimum power of 600 W and a maximum power of 1600 W. In this case, when the moisture adsorption-desorption component 203 passes through the desorption space 202, the heating temperature is relatively high, but still within the optimal regeneration temperature range; and when the moisture adsorption-desorption component 203 rotates to the moisture absorbing space 201 to absorb moisture, its temperature is still within the optimal moisture absorbing temperature range. Consequently, there is a relatively small impact on the regeneration efficiency and moisture absorbing efficiency of the moisture adsorption-desorption component 203 itself, and the heating efficiency for the circulating airflow somewhat increases due to the increased temperature within the moisture absorbing space 201. However, the temperature of the circulating airflow is still controlled within a preset range, such that no damage is caused to the laundry. Based on experimental measurements, during the dehumidifying operation stage, the actual temperature difference between the first and second moisture absorbing spaces varies approximately within the range of 73.7°C to 79.5°C, with a drying time of about 130 minutes.

In Embodiment 6, the rotational speed of the moisture adsorption-desorption component 203 remains unchanged at 5 rpm; the operating power of the heating assembly 2082 remains unchanged between the minimum power of 600 W and the maximum power of 1400 W; and the thickness-to-diameter ratio of the moisture adsorption-desorption component 203 is changed to 23 mm/350 mm = 0.0657. In this case, the dimension of the moisture adsorption-desorption component 203 increases, and the heating power remains unchanged; when the moisture adsorption-desorption component 203 passes through the desorption space 202, its temperature as increased is lower than that in Embodiment 1 but still within the optimal regeneration temperature range; and when the moisture adsorption-desorption component 203 rotates to the moisture absorbing space 201 to absorb moisture, its temperature is still within the optimal moisture absorbing temperature range. Consequently, there is a relatively small impact on the regeneration efficiency and moisture absorbing efficiency of the moisture adsorption-desorption component 203 itself, and the moisture absorbing efficiency somewhat increases due to the increased dimension of the moisture adsorption-desorption component 203, which is basically offset by the impact of the decreased heating efficiency of the circulating airflow on the drying efficiency. Based on experimental measurements, during the dehumidifying operation stage, the actual temperature difference between the first and second moisture absorbing spaces varies approximately within the range of 70.4°C to 75.5°C, with a drying time of about 132 minutes.

In Embodiment 7, the rotational speed of the moisture adsorption-desorption component 203 remains unchanged at 5 rpm; the operating power of the heating assembly 2082 remains unchanged between the minimum power of 600 W and the maximum power of 1400 W; and the thickness-to-diameter ratio of the moisture adsorption-desorption component 203 is changed to 27 mm/300 mm = 0.0900. In this case, the dimension of the moisture adsorption-desorption component 203 decreases, and the heating power remains unchanged; when the moisture adsorption-desorption component 203 passes through the desorption space 202, its temperature as increased is higher than that in Embodiment 1 but still within the optimal regeneration temperature range; and when the moisture adsorption-desorption component 203 rotates to the moisture absorbing space 201 to absorb moisture, its temperature is still within the optimal moisture absorbing temperature range. Consequently, there is a relatively small impact on the regeneration efficiency and moisture absorbing efficiency of the moisture adsorption-desorption component 203 itself, and the moisture absorbing efficiency decreases due to the decreased dimension of the moisture adsorption-desorption component 203, which is basically offset by the impact of the increased heating efficiency of the circulating airflow on the drying efficiency. Based on experimental measurements, during the dehumidifying operation stage, the actual temperature difference between the first and second moisture absorbing spaces varies approximately within the range of 74.5°C to 79.2°C, with a drying time of about 133 minutes.

The overall data of Embodiment 1 to Embodiment 7 as mentioned above are shown in Table 1.

**Table 1 Comparison of Data from Embodiments**

| Series number of embodime nt | Thickness-to-diameter ratio of the moisture adsorption-desorption component | Rotational speed of the moisture adsorption desorption componen t (r/min) | Power of heating assembly (W) | Temperature difference between the first moisture absorbing space and the second moisture absorbing space (°C) | Drying time (min) |
|---|---|---|---|---|---|
| Embodime nt 1 | 25 mm/320 mm = 0.0780 | 5 | P1 = 600 | 72.7-77.9 | 128 |
| | | | P2 = 1400 | | |
| Embodime nt 2 | 25 mm/320 mm = 0.0780 | 3 | P1 = 600 | 72.9-78.6 | 130 |
| | | | P2 = 1400 | | |
| Embodime nt 3 | 25 mm/320 mm = 0.0780 | 8 | P1 = 600 | 70.3-76.2 | 133 |
| | | | P2 = 1400 | | |
| Embodime nt 4 | 25 mm/320 mm = 0.0780 | 5 | P1 = 400 | 70.2-75.6 | 136 |
| | | | P2 = 1400 | | |
| Embodime nt 5 | 25 mm/320 mm = 0.0780 | 5 | P1 = 600 | 73.7-79.5 | 130 |
| | | | P2 = 1600 | | |
| Embodime nt 6 | 23 mm/350 mm = 0.0657 | 5 | P1 = 600 | 70.4-75.5 | 132 |
| | | | P2 = 1400 | | |
| Embodime nt 7 | 27 mm/300 mm = 0.0900 | 5 | P1 = 600 | 74.5-79.2 | 133 |
| | | | P2 = 1400 | | |

In Comparative Examples of the present application, the thickness-to-diameter ratio and rotational speed of the moisture adsorption-desorption component 203, and the heating efficiency of the heating assembly 2082 are adjusted outside the selected range, such that the regeneration temperature of the moisture adsorption-desorption component 203 in the desorption space 202 is increased or decreased to go beyond the optimal regeneration temperature range, leading to a reduced regeneration performance of the moisture adsorption-desorption component 203 itself. At the same time, after the affected part of the moisture adsorption-desorption component 203 rotates into the moisture absorbing space 201, its moisture absorbing performance also decreases, such that the final drying efficiency on the laundry is affected. At the same time, the heating efficiency for the circulating airflow also varies greatly due to the temperature increase or decrease of the moisture adsorption-desorption component 203 in the moisture absorbing space 201, such that the final drying effect on the laundry is affected. The following Comparative Examples 1 to 6 all involve the adjustment of relevant parameters outside the defined range, so as to give a greater impact on the regeneration efficiency and moisture absorbing efficiency of the moisture adsorption-desorption component 203 and heating efficiency for the circulating airflow. Therefore, during the dehumidifying operation stage, the temperature difference between the first moisture absorbing space and the second moisture absorbing space in the moisture absorbing space 201 may not be maintained within the range of 70°C to 80°C. At this time, the drying time for the laundry is relatively long and the drying effect is bad, which may in some cases cause damages to the laundry.

In Comparative Example 1, the thickness-to-diameter ratio of the moisture adsorption-desorption component 203 is set to 25 mm/320 mm = 0.0780; the operating power of the heating assembly 2082 is set between a minimum power of 600 W and a maximum power of 1400 W; and the rotational speed of the moisture adsorption-desorption component 203 is set to 1 rpm. In this case, due to the low rotational speed, the heating time in the desorption space 202 is relatively long, the temperature of the moisture adsorption-desorption component 203 in the desorption space 202 is higher than the optimal regeneration temperature range, and then, the moisture adsorption-desorption component 203 goes beyond the optimal moisture absorbing temperature range during part of time after rotating to the moisture absorbing space 201, resulting in a decrease in both the regeneration efficiency and moisture absorbing efficiency of the moisture adsorption-desorption component 203 itself. In addition, the heating efficiency of the moisture adsorption-desorption component 203 for the circulating airflow passing through is also increased due to the increase in the temperature of the moisture absorbing space 201. After being heated, the circulating airflow entering the drum 30 may damage the laundry if the temperature is too high. In this case, the circulating airflow is subjected to insufficient dehumidification and excessive heating, such that the temperature difference between the first and second moisture absorbing spaces is higher than 70°C to 80°C, and the drying time is longer. Based on experimental measurements, during the dehumidifying operation stage, the actual temperature difference between the first and second moisture absorbing spaces is approximately 83.5°C to 90.9°C, and the drying time is about 162 minutes.

In Comparative Example 2, the thickness-to-diameter ratio of the moisture adsorption-desorption component 203 is set to 25 mm/320 mm = 0.0780; the heating power of the heating assembly 2082 is set between a minimum power of 600 W and a maximum power of 1400 W; and the rotational speed of the moisture adsorption-desorption component 203 is set to 12 rpm. In this case, due to the high rotational speed, the heating time in the desorption space 202 is relatively short, the temperature of the moisture adsorption-desorption component 203 in the desorption space 202 is lower than the optimal regeneration temperature range, and then , the moisture adsorption-desorption component 203 goes beyond the optimal moisture absorbing temperature range for part of time after rotating to the moisture absorbing space 201, resulting in a decrease in both the regeneration efficiency and moisture absorbing efficiency of the moisture adsorption-desorption component 203 itself. In addition, the heating efficiency of the moisture adsorption-desorption component 203 for the circulating airflow passing through is also decreased due to the decrease in the temperature of the moisture absorbing space 201. In this case, both the dehumidification and heating of the circulating airflow are insufficient, such that the temperature difference between the first and second moisture absorbing spaces is lower than the range of 70°C to 80°C, and the drying time is longer. Based on experimental measurements, during the dehumidifying operation stage, the actual temperature difference between the first and second moisture absorbing spaces is approximately 66.6°C to 72.5°C, and the drying time is about 169 minutes.

In Comparative Example 3, the thickness-to-diameter ratio of the moisture adsorption-desorption component 203 is set to 25 mm/320 mm = 0.0780; the rotational speed of the moisture adsorption-desorption component 203 is set to 5 rpm; and the operating power of the heating assembly 2082 is set between a minimum power of 200 W and a maximum power of 1400 W. In this case, when the moisture adsorption-desorption component 203 passes through the desorption space 202, the heating temperature is relatively low, resulting in that the temperature of the moisture adsorption-desorption component 203 in the desorption space 202 is lower than the optimal regeneration temperature range; and the temperature of the moisture adsorption-desorption component 203 goes beyond the optimal moisture absorbing temperature range during part of time after rotating to the moisture absorbing space 201, resulting in a decrease in both the regeneration efficiency and moisture absorbing efficiency of the moisture adsorption-desorption component 203 itself. In addition, the heating efficiency for the circulating airflow decreases due to the decrease in temperature of the moisture absorbing space 201. In this case, both the dehumidification and heating of the circulating airflow by the moisture adsorption-desorption component 203 are insufficient, such that the temperature difference between the first moisture absorbing space and the second moisture absorbing space is lower than the range of 70°C-80°C, and the drying time is longer. Based on experimental measurements, during the dehumidifying operation stage, the actual temperature difference between the first and second moisture absorbing spaces is approximately 66.5°C to 72.3°C, and the drying time is about 168 minutes.

In Comparative Example 4, the thickness-to-diameter ratio of the moisture adsorption-desorption component 203 is set to 25 mm/320 mm = 0.0780; the rotational speed of the moisture adsorption-desorption component 203 is set to 5 rpm; and the operating power of the heating assembly 2082 is set between a minimum power of 600 W and a maximum power of 2200 W. In this case, when the moisture adsorption-desorption component 203 passes through the desorption space 202, the heating temperature is relatively high, resulting in that the temperature of the moisture adsorption-desorption component 203 in the desorption space 202 is higher than the optimal regeneration temperature range; and the moisture adsorption-desorption component 203 goes beyond the optimal moisture absorbing temperature range for part of time after rotating to the moisture absorbing space 201, resulting in a decrease in both the regeneration efficiency and moisture absorbing efficiency of the moisture adsorption-desorption component 203 itself. In addition, the heating efficiency for the circulating airflow increases due to the increase in temperature of the moisture absorbing space 201; and after being heated, the circulating airflow entering the drum 30 may damage the laundry due to high temperature. In this case, the circulating airflow is subjected to insufficient dehumidification and excessive heating, such that the temperature difference between the first and second moisture absorbing spaces is higher than 70°C- 80°C, and the drying time is longer; and due to the high operating power of the laundry treatment apparatus, the power consumption is increased. Based on experimental measurements, during the dehumidifying operation stage, the actual temperature difference between the first and second moisture absorbing spaces is approximately 79.6°C to 92.8°C, and the drying time is about 171 minutes.

In Comparative Example 5, the rotational speed of the moisture adsorption-desorption component 203 is set to 5 rpm; the operating power of the heating assembly 2082 is set between a minimum power of 600 W and a maximum power of 1400 W; and the thickness-to-diameter ratio of the moisture adsorption-desorption component 203 is set to 18 mm/400 mm = 0.0450. In this case, the dimension of the moisture adsorption-desorption component 203 increases, and the heating power remains unchanged. When the moisture adsorption-desorption component 203 passes through the desorption space 202, the temperature as increased is relatively low, resulting in that the temperature of the moisture adsorption-desorption component 203 in the desorption space 202 is lower than the optimal regeneration temperature range. When the moisture absorbing and dehumidifying component 203 rotates to the moisture absorbing space 201 to absorb moisture, its temperature will also be lower than the optimal moisture absorbing temperature range, resulting in a decrease in both the regeneration efficiency and moisture absorbing efficiency of the moisture adsorption-desorption component 203 itself. In this case, the dehumidification and heating of the circulating airflow by the moisture absorbing and dehumidifying component 203 is insufficient, such that the temperature difference between the first and second moisture absorbing spaces is lower than the range of 70°C to 80°C, and the drying time is longer. Based on experimental measurements, during the dehumidifying operation stage, the actual temperature difference between the first and second moisture absorbing spaces is approximately 75.1°C to 82.9°C, and the drying time is about 155 minutes.

In Comparative Example 6, the rotational speed of the moisture adsorption-desorption component 203 is set to 5 rpm; the operating power of the heating assembly 2082 is set between a minimum power of 600 W and a maximum power of 1400 W; and the thickness-to-diameter ratio of the moisture adsorption-desorption component 203 is set to 30 mm/250 mm = 0.1200. In this case, the dimension of the moisture adsorption-desorption component 203 is reduced, and the heating power remains unchanged. When the moisture adsorption-desorption component 203 passes through the desorption space 202, the temperature as increased is relatively high, resulting in that the temperature of the moisture adsorption-desorption component 203 in the desorption space 202 is higher than the optimal regeneration temperature range. When the moisture absorbing and dehumidifying component 203 rotates to the moisture absorbing space 201 to absorb moisture, its temperature is still higher than the optimal moisture absorbing temperature range, resulting in a decrease in both the regeneration efficiency and moisture absorbing efficiency of the moisture adsorption-desorption component 203 itself. In addition, the moisture absorbing efficiency further decreases due to the reduction in dimension of the moisture adsorption-desorption component 203. Furthermore, the heating efficiency for the circulating airflow is somewhat improved due to the increase in temperature in the moisture absorbing space 201; and after being heated, the circulating airflow entering the drum 30 may damage the laundry if the temperature is too high. In this case, the circulating airflow is subjected to insufficient dehumidification and excessive heating, such that the temperature difference between the first and second moisture absorbing spaces is higher than 70°C- 80°C, and the drying time is longer. Based on experimental measurements, during the main dehumidifying operation stage, the actual temperature difference between the first and second moisture absorbing spaces is approximately 77.1°C to 89.6°C, and the drying time is about 159 minutes.

It should be noted that the optimal regeneration temperature and optimal moisture absorbing temperature described in the above embodiments only indicate the temperatures at which the moisture absorbing efficiency and regeneration efficiency are highest, rather than indicating that the regeneration and moisture absorption cannot be achieved outside of these temperature ranges.

The overall data of Comparative Example 1 to 6 as mentioned above are shown in Table 2.

**Table 2 Comparison of Data from Comparative Examples**

| Series number of comparati ve example | Thickness-to-diameter ratio of the moisture adsorption-desorption component | Rotational speed of the moisture adsorption-desorption component (r/min) | Power of heating assembly (W) | Temperature difference between the first moisture absorbing space and the second moisture absorbing space (°C) | Drying time (min) |
|---|---|---|---|---|---|
| Comparati ve example 1 | 25 mm/320 mm = 0.0780 | 1 | P1 = 600 | 83.5-90.9 | 162 |
| | | | P2 = 1400 | | |
| Comparati ve example 2 | 25 mm/320 mm = 0.0780 | 12 | P1 = 600 | 66.6-72.5 | 169 |
| | | | P2 = 1400 | | |
| Comparati ve example 3 | 25 mm/320 mm = 0.0780 | 5 | P1 = 200 | 66.5-72.3 | 168 |
| | | | P2 = 1400 | | |
| Comparati ve example 4 | 25 mm/320 mm = 0.0780 | 5 | P1 = 600 | 79.6-92.8 | 171 |
| | | | P2 = 2200 | | |
| Comparati ve example 5 | 18 mm/400 mm = 0.0450 | 5 | P1 = 600 | 75.1-82.9 | 155 |
| | | | P2 = 1400 | | |
| Comparati ve example 6 | 30 mm/250 mm = 0.1200 | 5 | P1 = 600 | 77.1-89.6 | 159 |
| | | | P2 = 1400 | | |

In summary, the present application provides a laundry treatment apparatus, in which the structural parameters of the moisture adsorption-desorption component in the drying module and the effective operating power of the heating assembly are defined, to ensure that the temperature difference between at least part of the first moisture absorbing space and at least part of the second moisture absorbing space ranges from 70°C to 80°C. In addition, the first airflow temperature at least at a position close to the drum air inlet is approximately between 70°C and 80°C. The present application further provides a laundry treatment apparatus, in which the structural parameters of the moisture adsorption-desorption component in the drying module and the effective operating power of the heating assembly are defined, such that the second airflow temperature at least at a position close to the drum air outlet is approximately between 50°C and 60°C, and the temperature difference between the first airflow temperature and the second airflow temperature is 25 ± 5°C. The laundry treatment apparatus can achieve both a good drying efficiency and a good drying effect.

The technical features of the aforesaid embodiments can be employed in arbitrary combinations. For the sake of brevity, the description is not made to all possible combinations of respective technical features of the aforesaid embodiments, which, however, shall be regarded as falling within the scope of this specification as long as no contradiction occurs. In other words, the non-conflicting parts of the above embodiments may replace or supplement each other to form new embodiments.

The present application has been illustrated by means of the aforesaid embodiments, but it should be understood that the aforesaid embodiments are merely for exemplary and illustrative purposes, and are not intended to limit the present application to the scope of the embodiments as described. Furthermore, it can be understood by those skilled in the art that the present application is not limited to the aforesaid embodiments and that a greater variety of variations and modifications can be made in accordance with the teachings of the present application, and these variations and modifications shall fall within the protection scope as claimed by the present application. The protection scope of the present application is defined by the appended claims and their equivalent scopes.

## Claims

1. A laundry treatment apparatus, comprising: a drum and a drying module, wherein
the drum at least has a drum air outlet and a drum air inlet;
the drying module comprises: a housing, and a moisture adsorption-desorption component;
the housing at least comprises a first housing and a second housing, wherein the first housing and the second housing are in sealing fit to form at least a space for accommodating the moisture adsorption-desorption component, and the moisture adsorption-desorption component rotates within the space;
at least two partition members are provided at corresponding positions on the first housing and the second housing along a direction from side walls of the first housing and the second housing towards a central region of the first housing and the second housing respectively, wherein the at least two partition members separate the space into at least a moisture absorbing space and a desorption space on a projection plane perpendicular to a rotating direction of the moisture adsorption-desorption component;
a first moisture absorbing space and a second moisture absorbing space are formed in the moisture absorbing space on both sides of the moisture adsorption-desorption component, respectively, wherein the first moisture absorbing space is a space with a first humidity of airflow, and an airflow from the drum air outlet flows in the first moisture absorbing space, the second moisture absorbing space is a space that has a second humidity of airflow after moisture is absorbed by the moisture adsorption-desorption component, and the first airflow humidity is greater than the second airflow humidity; and
during at least part of a dehumidifying operation period, a temperature difference between at least part of the first moisture absorbing space and at least part of the second moisture absorbing space ranges from 70°C to 80°C.

2. The laundry treatment apparatus according to claim 1, wherein during at least part of the dehumidifying operation period, a temperature difference between at least partial surfaces on both sides of the moisture adsorption-desorption component ranges from 70°C to 80°C in the moisture absorbing space.

3. The laundry treatment apparatus according to claim 1 or 2, wherein during at least part of the dehumidifying operation period, a temperature difference between substantially symmetrical positions of the first moisture absorbing space and the second moisture absorbing space ranges from 70°C to 80°C, or a temperature difference between substantially symmetrical positions on surfaces of both sides of the moisture adsorption-desorption component ranges from 70°C to 80°C.

4. The laundry treatment apparatus according to claim 3, wherein at least a first airflow inlet is formed in the first housing; at least a first airflow outlet is formed in the second housing; and the first airflow inlet and the first airflow outlet are respectively provided to be adjacent to the at least two partition members.

5. The laundry treatment apparatus according to claim 4, wherein the moisture adsorption-desorption component rotates sequentially through the desorption space, the first airflow outlet, and the first airflow inlet; and during at least part of the dehumidifying operation period, in the moisture absorbing space, the temperature at a location between the first airflow outlet and the first airflow inlet ranges from 70°C to 80°C.

6. The laundry treatment apparatus according to claim 1, wherein the drying module comprises a heating assembly provided in the desorption space; and the heating assembly operates between a first heating power and a second heating power in a fluctuated or alternate manner.

7. The laundry treatment apparatus according to claim 6, wherein the first heating power is between 400 W and 800 W, and the second heating power is between 1200 W and 1600 W.

8. The laundry treatment apparatus according to claim 1, wherein a thickness-to-diameter ratio of the moisture adsorption-desorption component ranges from 1/80 to 1/4.

9. The laundry treatment apparatus according to claim 8, wherein a thickness-to-diameter ratio of the moisture adsorption-desorption component ranges from 1/20 to 1/10.

10. A laundry treatment apparatus, comprising: a drum and a drying module, wherein
the drum at least has a drum air outlet and a drum air inlet;
the drying module comprises: a housing, and a moisture adsorption-desorption component;
the housing at least comprises a first housing and a second housing, wherein the first housing and the second housing are in sealing fit to form at least a space for accommodating the moisture adsorption-desorption component, and the moisture adsorption-desorption component rotates within the space;
at least two partition members are provided at corresponding positions on the first housing and the second housing along a direction from side walls of the first housing and the second housing towards a central region of the first housing and the second housing respectively, wherein the at least two partition members separate the space into at least a moisture absorbing space and a desorption space on a projection plane perpendicular to a rotating direction of the moisture adsorption-desorption component;
the first housing is provided with at least a first airflow inlet in communication with the drum air outlet, and the second housing is provided with at least a first airflow outlet in communication with the drum air inlet; and
during at least part of a dehumidifying operation period, a temperature of an airflow at least at a position adjacent to the drum air inlet between the first airflow outlet and the drum air inlet is a first temperature, and the first temperature ranges from 70°C to 80°C.

11. The laundry treatment apparatus according to claim 10, wherein a temperature of an airflow at least at a position on the drum close to the drum air outlet is a second airflow temperature, and the second airflow temperature ranges from 50°C to 60°C.

12. The laundry treatment apparatus according to claim 10, wherein at least one air exhaust duct is provided between the first airflow inlet and the drum air outlet; and a temperature of an airflow at least at a position in the air exhaust duct close to the drum air outlet is a second airflow temperature, and the second airflow temperature ranges from 50°C to 60°C.

13. The laundry treatment apparatus according to claim 11 or 12, wherein a temperature difference between the first airflow temperature and the second airflow temperature is 25 ± 5°C.

14. The laundry treatment apparatus according to claim 13, wherein an air intake duct is provided between the first airflow outlet and the drum air inlet; a first temperature detection unit is provided on the air intake duct at a position close to the drum air inlet; and a second temperature detection unit is provided on the drum or the air exhaust duct close to the drum air outlet.

15. The laundry treatment apparatus according to claim 10, wherein the drying module comprises a heating assembly provided in the desorption space; and the heating assembly operates between a first heating power and a second heating power in a fluctuated or alternate manner.

16. The laundry treatment apparatus according to claim 15, wherein the first heating power is between 400 W and 800 W, and the second heating power is between 1200 W and 1600 W.

17. The laundry treatment apparatus according to claim 10, wherein a thickness-to-diameter ratio of the moisture adsorption-desorption component ranges from 1/80 to 1/4.

18. The laundry treatment apparatus according to claim 16, wherein a thickness-to-diameter ratio of the moisture adsorption-desorption component ranges from 1/20 to 1/10.

19. The laundry treatment apparatus according to claim 10, wherein a circulating fan and a regenerating fan are provided on an airflow path where the moisture absorbing space is located and an airflow path where the desorption space is located, respectively.
